# EUROPÄISCHE PATENTSCHRIFT

(11) **EP 3 458 365 B1**
(45) Veröffentlichungstag und Bekanntmachung des Hinweises auf die Patenterteilung: **17.06.2020**
(21) Anmeldenummer: 17721068.9
(22) Anmeldetag: 19.04.2017
(51) Int. Cl.: B65B 57/00, B65B 1/00

(54) **VERFAHREN ZUR HERSTELLUNG VON VERPACKUNGEN MITTELS EINER VERPACKUNGSMASCHINE**
METHOD FOR PRODUCING PACKAGES USING A PACKAGING MACHINE
PROCÉDÉ DE PRODUCTION D'EMBALLAGES UTILISANT UNE MACHINE D'EMBALLAGE

(30) Priorität: 19.05.2016 DE 102016208670
(43) Veröffentlichungstag der Anmeldung: 27.03.2019
(73) Patentinhaber: Rovema GmbH, 35463 Fernwald-Annerod (DE)
(72) Erfinder: LUTZ, Erhard, 35325 Muecke (DE); WULSCH, Siegfried, 35327 Ulrichstein (DE)
(74) Vertreter: advotec.
(86) Internationale Anmeldenummer: PCT/EP2017/059224
(87) Internationale Veröffentlichungsnummer: WO 2017/198412

(56) Entgegenhaltungen:
- EP-A2- 1 433 708
- WO-A2-2014/023428
- DE-A1-102006 012 038
- DE-A1-102012 004 341

## Beschreibung

Die Erfindung betrifft ein Verfahren zur Herstellung von Verpackungen, insbesondere Schlauchbeuteln, mittels einer Verpackungsmaschine.

Für die Herstellung von Verpackungen, insbesondere Schlauchbeuteln, werden Verpackungsmaschinen unterschiedlichster Ausführungsformen weltweit eingesetzt. Verpackungsmaschinen werden dabei zu komplexen automatisierten Systemen mit hoher Produktivität eingesetzt. Die Funktion der Verpackungsmaschinen beruht dabei auf der taktsynchronen Ausführung einer Vielzahl von Bewegungsabläufen der verschiedenen Funktionselemente der Verpackungsmaschine, um den Verpackungsprozess mit hoher Geschwindigkeit durchführen zu können. In einer Schlauchbeutelmaschine müssen beispielsweise die Antriebe zum Antrieb des Hüllstoffförderers und die Antriebe zum Antrieb der Siegelbacken und die Antriebe zum Antrieb der Beuteltrenneinrichtung mit höchster Geschwindigkeit taktsynchron zueinander abgestimmt verfahren werden, um einen sicheren Prozessablauf zu realisieren.

Die Steuerung von bekannten Verpackungsmaschinen steuern dabei taktsynchron die verschiedenen Antriebseinheiten an und benutzen dazu vordefinierte Bewegungsabläufe. Aus dem Stand der Technik sind dabei zwei grundsätzlich unterschiedliche Maschinenkonzepte bekannt. Gemäß dem ersten Maschinenkonzept wird zur Steuerung der Verpackungsmaschine eine konventionelle SPS-Steuerung verwendet, wie sie auch in anderen Industriezweigen, insbesondere im Werkzeugmaschinenbau und im Anlagenbau zum Einsatz kommen. Die Verwendung einer solchen SPS-Steuerung hat den Vorteil, dass die dafür verwendeten Komponenten in den jeweiligen Märkten problemlos verfügbar sind, da sie einen sehr großen Markt abdecken. Gemäß dem zweiten Maschinenkonzept dient zur Steuerung der Verpackungsmaschine eine spezifisch programmierte PC-Steuerung. Dieses Maschinenkonzept unter Verwendung einer PC-Steuerung hat den Vorteil, dass PC-Steuerungen im Hinblick auf die Rechenleistung und die Programmierbarkeit sehr viel leistungsfähiger sind als die bekannten SPS-Steuerungen. Insbesondere können PC-Steuerungen in Programmierhochsprachen programmiert werden und ermöglichen dadurch einen erheblich komfortableren und prozesssicheren Betrieb der Verpackungsmaschine.

Beim bisherigen Nutzungskonzept der bekannten Verpackungsmaschinen musste sich der Hersteller bzw. der Verwender für die Verwendung einer SPS-Steuerung oder für den Einsatz einer PC-Steuerung entscheiden, woraus sich die entsprechenden Vor- bzw. Nachteile ergeben. Daraus ergaben sich große Nachteile, weil in bestimmten Märkten nur SPS-Steuerungen gewünscht werden, so dass Hersteller von Verpackungsmaschinen mit PC-Steuerung in diesen Märkten nicht lieferfähig waren.

WO2014/023428 A2 offenbart eine Verpackungsanlage, wobei lokale Steuereinheiten Daten an eine zentrale Steuerungseinrichtung senden, die diese Informationen verarbeitet und Steuerdaten berechnet, die an die lokalen Steuereinheiten zurückgesendet werden.

Aufgabe der vorliegenden Erfindung ist es deshalb, ein Verfahren zum Betrieb einer Verpackungsmaschine vorzuschlagen, die den Einsatz einer SPS-Steuerung erlaubt und dabei die Vorteile einer PC-Steuerung erhält. Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf der Grundüberlegung, dass eine Verpackungsmaschine mit SPS-Steuerung Verwendung findet. Die SPS-Steuerung hat dabei insbesondere die Aufgabe mehrere unabhängig voneinander ansteuerbare elektronische Antriebseinheiten derart taktsynchron anzusteuern, dass die von den Antriebseinheiten angetriebenen Funktionselemente der Verpackungsmaschinen beim Abfahren von vordefinierten Bewegungsabläufen taktsynchron verfahren werden. Die Bestimmung der vorgegebenen Bewegungsabläufe erfolgt dabei in Abhängigkeit der Einstellparameter des Herstellungsprozesses, beispielsweise der Anzahl der zu verpackenden Gegenstände pro Zeiteinheit, der Verpackungsabmessung, der Siegelzeit etc.

Im ersten Verfahrensabschnitt werden zunächst die geforderten Einstellparameter zur Bestimmung des gewünschten Herstellungsprozesses zur Herstellung von Verpackungen an der SPS-Steuerung erfasst.

Noch vor Beginn des eigentlichen Herstellungsprozesses werden dann die Einstellparameter von der SPS-Steuerung an eine zusätzlich in der Verpackungsmaschine vorgesehene PC-Steuerung übergeben. Bei der zusätzlichen PC-Steuerung kann es sich beispielsweise um einen separaten Hochleistungsrechner handeln, auf dem die entsprechende Betriebssoftware zum Betrieb einer Verpackungsmaschine installiert ist.

Nach Übergabe der Einstellparameter werden dann in der PC-Steuerung unter Verwendung der darauf installierten Maschinensoftware taktzeitabhängige Parameterprofilkurven für die verschiedenen Antriebseinheiten der Verpackungsmaschine berechnet. Die Parameterprofilkurven sind dabei dadurch charakterisiert, dass sie die taktzeitsynchrone Ansteuerung der verschiedenen Antriebseinheiten beim Abfahren von vordefinierten Bewegungsabläufen ermöglichen. Dies bedeutet also mit anderen Worten, dass die Parameterprofilkurven für jeden relevanten Parameter der Verpackungsmaschine eine Parameterkurve über die Taktzeit definiert. Da alle Parameterkurven auf die Taktzeit bezogen sind, ergibt sich daraus eine taktzeitsynchrone Ansteuerung der verschiedenen Antriebseinheiten. Die Parameterprofilkurven werden dabei unter Berücksichtigung der vorgegebenen Einstellparameter des Herstellungsprozesses und unter Einberechnung der statischen bzw. dynamischen Grenzwerte der Verpackungsmaschine berechnet. Erfindungsgemäß kann in der PC-Steuerung für jeden Parameter der Verpackungsmaschine eine Parameterprofilkurve berechnet werden. Besonders große Bedeutung hat die Berechnung solcher Parameterprofilkurven für die taktzeitabhängigen Bewegungsprofile, die taktzeitabhängigen Geschwindigkeitsprofile, die taktzeitabhängigen Beschleunigungsprofile, die taktzeitabhängigen Kraftprofile und/oder die taktzeitabhängigen Drehmomentprofile. Dies bedeutet also mit anderen Worten, dass für jede Bewegung eines Funktionselements der Verpackungsmaschine der Aufenthaltsort, die Geschwindigkeit, die Beschleunigung, das Drehmoment und/oder die Kraft zu jedem Zeitpunkt während eines Arbeitstakts vorbestimmt werden kann.

Sobald die Parameterprofilkurven in der PC-Steuerung berechnet sind, werden diese anschließend in eine Mehrzahl von Stützpunkten diskretisiert. Das heißt, die häufig als mathematische Funktion des Parameters über die Taktzeit angegebene Parameterprofilkurve wird in einzelne Stützpunkte verlegt, wobei jeder Stützpunkt auf der Parameterprofilkurve liegt und wobei die Summe aller Stützpunkte die Parameterprofilkurve repräsentiert. Jeder Stützpunkt selbst besteht dabei aus einer bestimmten Taktzeit entlang des Arbeitstakts und zumindest einem dieser Taktzeit zugeordneten Parameterwert.

Nach der Diskretisierung der Parameterprofilkurven werden die daraus abgeleiteten Stützpunkte in Stützpunktdatensätze umgewandelt. Bei den Stützpunktdatensätzen kann es sich um eine entsprechende Tabelle handeln, in deren Zellen die Daten der verschiedenen Stützpunkte eingetragen sind.

Zuletzt werden die Stützpunktdatensätze von der PC-Steuerung an die SPS-Steuerung zurückübertragen. Der erfindungsgemäße Vorteil des Verfahrens liegt darin, dass die Berechnung der taktzeitabhängigen Parameterprofilkurven auf einer PC-Steuerung durchgeführt wird, die parallel zu der für die Steuerung der Verpackungsmaschine vorhandenen SPS-Steuerung vorhanden ist. Durch Konvertierung der taktzeitabhängigen Parameterprofilkurven in Stützpunktdatensätze wird es möglich, alle von den PC-Steuerungen bekannten wesentlichen Funktionalitäten auch auf Verpackungsmaschinen mit SPS-Steuerung zu übertragen, da bekannte SPS-Steuerungen solche Stützpunktdatensätze problemlos verarbeiten können.

Bei der Berechnung der taktzeitabhängigen Parameterprofilkurven und deren anschließenden Diskretisierung in eine Vielzahl von Stützpunkten kann es bei Verwendung bekannter PC-Steuerungen dazu kommen, dass diese bei der Diskretisierung der Parameterprofilkurven eine sehr große Anzahl von Stützpunkten errechnen. Bei bekannten PC-Steuerungen kann es sich dabei je Parameterprofilkurve um mehrere Tausend Stützpunkte handeln. Die Weitergabe einer so großen Anzahl von Stützpunkten in den Stützpunktdatensätzen an die SPS-Steuerung kann Probleme im Hinblick auf die Laufzeit ergeben, da die Rechnerleistung von der bekannten SPS-Steuerung nicht so leistungsfähig ist wie die Rechnerleistung der PC-Steuerung. Zur Vermeidung solcher Laufzeitprobleme ist es deshalb besonders vorteilhaft, wenn bei der Generierung der Stützpunktdatensätze die Anzahl der aus der Diskretisierung der taktzeitabhängigen Parameterprofilkurven berechneten Stützpunkte reduziert wird. Nur die reduzierte Anzahl von Stützpunkten wird dann in die Stützpunktdatensätze übernommen und an die SPS-Steuerung weitergegeben.

In welcher Weise die taktzeitabhängigen Parameterprofilkurven in der PC-Steuerung berechnet werden, ist grundsätzlich beliebig. Besonders vorteilhaft ist es, wenn bei der Berechnung Polynomfunktionen höherer Ordnungen eingesetzt werden, da damit besonders ruckfreie und hochdynamische Bewegungsabläufe realisierbar sind. Um Probleme mit der Laufzeit bei der Abarbeitung des erfindungsgemäßen Verfahrens zu vermeiden, ist es weiterhin besonders vorteilhaft, wenn die PC-Steuerung die einzugebenden Einstellparameter und die auszugebenden taktzeitabhängigen Parameterprofilkurven mit der SPS-Steuerung über einen Echtzeitdatenbus austauscht. Besonders geeignet als Echtzeitdatenbus sind dabei bekannte Ethernet-Netzwerke.

Bei bekannten Verpackungsmaschinen mit SPS-Steuerung war die aus dem Bereich der PC-Steuerung bekannte Berechnung von einstellungsspezifischen dynamischen Grenzwerten in Abhängigkeit der Einstellparameter nicht möglich. Diese Berechnung von einstellungsspezifischen dynamischen Grenzwerten in Abhängigkeit von der vom Bediener eingegebenen Einstellparameter stellt jedoch einen hohen Komfort für das Bedienpersonal dar, da die Eingabe von durch die Maschinen nicht zu realisierenden Einstellparameterkombinationen ausgeschlossen wird. Gemäß einer bevorzugten Verfahrensvariante ist es deshalb vorgesehen, dass in der PC-Steuerung bei jeder Veränderung eines Einstellparameter unter Berücksichtigung von statischen Grenzwerten der Verpackungsmaschine zumindest ein einstellungsspezifischer dynamischer Grenzwert ermittelt und an die SPS-Steuerung weitergeleitet wird. Liegt der dynamische Grenzwert dann außerhalb des Stellbereichs der jeweils verwendeten Verpackungsmaschine hat das Bedienpersonal dann die Möglichkeit entsprechend zu reagieren, und die Einstellparameter entsprechend zu korrigieren.

Zur Ermittlung der dynamischen Grenzwerte können bevorzugt gespeicherte statische Grenzwerte und gespeicherte Kurventabellen und/oder gespeicherte mathematische Funktionen verarbeitet werden.

Weiterhin ist es besonders vorteilhaft, wenn die Ermittlung der dynamischen Grenzwerte bei Berücksichtigung zumindest eines dynamischen Bewegungsablaufs in der Verpackungsmaschine in einer Berechnungsmethode der sukzessiven Approximation erfolgt.

Um besonders ruckfreie und hochdynamische Bewegungsabläufe in einfacher Weise realisieren zu können, ist es weiterhin besonders vorteilhaft, wenn die taktzeitabhängigen Parameterprofilkurven in einem komplexen Berechnungsmodul der PC-Steuerung unter Verwendung einer in Hochsprache programmierten Berechnungssoftware erfolgt.

Welche Antriebseinheiten von der SPS-Steuerung unter Verwendung der in der PC-Steuerung aus den Parameterprofilkurven abgeleiteten Stützpunktdatensätzen angesteuert werden, ist grundsätzlich beliebig. Von größter Bedeutung ist dabei die Ansteuerung der Antriebseinheiten einer Verpackungsmaschine, insbesondere der Antriebseinheiten von Hüllstoffförderern, Siegelbacken und/oder Beutelschneidvorrichtungen. Selbstverständlich können aber auch beliebige andere Antriebeinheiten für alle an der Verpackungsmaschine vorhandenen Funktionseinheiten unter Verwendung der Stützpunktdatensätze angesteuert werden.

Eine Ausführungsform der Erfindung ist in den Zeichnungen schematisch dargestellt und wird nachfolgend beispielhaft erläutert.

Es zeigen:
- **Fig. 1**: eine vertikale Schlauchbeutelmaschine mit einem Teil der für den Antrieb der Funktionselemente der Schlauchbeutelmaschine vorhandenen Antriebe und der für die Steuerung der Antriebe notwendigen Steuerungseinrichtungen in seitlicher Ansicht;
- **Fig. 2**: einen beispielhaften Bewegungsablauf der Quersiegelbacken der Schlauchbeutelmaschine gemäß Fig. 1 bei Herstellung von Schlauchbeutelverpackungen;
- **Fig. 3**: drei Parameterprofilkurven zur taktzeitsynchronen Ansteuerung der Antriebe der Quersiegelbacken der Schlauchbeutelmaschine gemäß Fig. 1 beim Abfahren des Bewegungsablaufs gemäß Fig. 2;
- **Fig. 4**: den schematisierten Bewegungsablauf zur Durchführung des erfindungsgemäßen Verfahrens auf der Steuerung der Verpackungsmaschine gemäß Fig. 1 in schematisierter Ansicht.

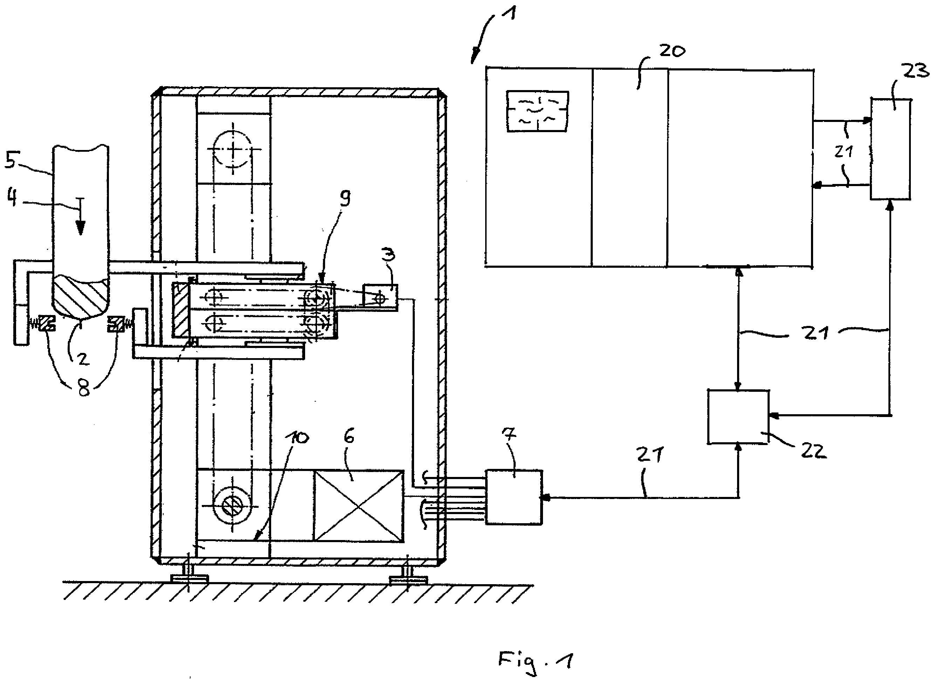

**Fig. 1** zeigt eine Schlauchbeutelmaschine 1 zur Herstellung von Schlauchbeuteln. Die Schweißbacken 8 zum Verschweißen der Beutelquernähte 2 sind mittels eines Motors 3 senkrecht zur Bewegungsrichtung 4 des Schlauchs 5 und mittels eines weiteren Motors 6 parallel zur Bewegungsrichtung 4 des Schlauchs 5 verschiebbar. Die Motoren 3 und 6 werden unabhängig voneinander von einer SPS-Steuerung 20 angesteuert, wobei die SPS-Steuerung 20 mit den Stellmotoren 3 und 6 und auch mit allen anderen Antriebseinheiten der Verpackungsmaschine 1 über einen Echtzeitdatenbus 21 vermittelt über eine Ein- und Ausgabeschnittstelle 7 und einen Datenbusschalter 22 kommuniziert.

Die Schweißbacken 8 sind über eine senkrecht zur Bewegungsrichtung 4 des Schlauchs 5 verschiebende Mechanik 9 verschiebbar mit einer parallel zur Bewegungsrichtung 4 des Schlauch 5 verschiebenden Mechanik 10 verbunden. Die Kombination einer Schlauchbeutelmaschine 1 mit einer SPS-Steuerung 20 entspricht dem vorbekannten Stand der Technik.

Erfindungsgemäß ist nun zusätzlich eine PC-Steuerung 23 vorgesehen, die über den Echtzeitdatenbus 21 Daten mit der SPS-Steuerung austauscht. Die PC-Steuerung 23 hat dabei die Aufgabe zunächst die Einstellparameter des Herstellungsprozesses von der SPS-Steuerung 20 einzulesen und daraus zunächst Parameterprofilkurven für den Betrieb der verschiedenen Antriebeinheiten der Verpackungsmaschine 1, insbesondere für die Stellmotoren 3 und 6 zu berechnen. Das erfindungsgemäße Verfahren soll dabei nachfolgend kurz anhand eines Beispiels erläutert werden.

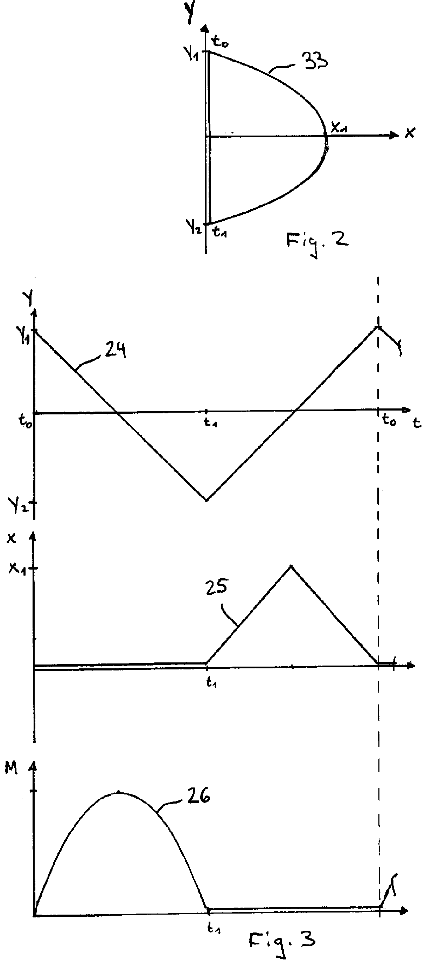

**Fig. 2** zeigt einen bekannten Bewegungsablauf 33, nämlich eine D-Kurve, die die beiden Quersiegelbacken 8 beim Quersiegeln von Schlauchbeuteln jeweils durchlaufen müssen. Befinden sich die beiden Quersiegelbacken jeweils in der Mitte und werden unter Zwischenlage des Schlauchbeutelmaterials zusammengedrückt, so werden sie zunächst allein in Y-Richtung verfahren. Während dieser rein vertikalen Verstellung wird die Antriebskraft durch Erhöhung des Antriebsmoments des Antriebsmotors 3 prozessabhängig erhöht und dadurch die Verschweißung des Folienmaterials bewirkt. Nach ausreichender Verschweißung werden dann die Quersiegelbacken 8 horizontal auseinandergefahren und während des horizontalen Auseinanderfahrens auch wieder vertikal nach oben verstellt. Nach Erreichen des Ausgangspunkts kann dann in einem nächsten Arbeitstakt der nächste Schlauchbeutel gesiegelt werden.

**Fig. 3** zeigt beispielhaft drei Parameterprofilkurven 24, 25 und 26 für das Abfahren der in Fig. 2 dargestellten Bewegung einer Quersiegelbacke 8. Dabei zeigen die beiden oberen Parameterprofilkurven 24 und 25 die taktzeitabhängigen Bewegungsprofile in X-Richtung bzw. in Y-Richtung und die untere Parameterprofilkurve 26 das zugehörige synchron abzufahrende Drehmomentprofil. Man erkennt, dass der Antrieb in Y-Richtung während jedes Takts alternierend zwischen den maximalen Auslenkungen Y1 und Y2 verfahren wird, um die Quersiegelbacken 8 alternierend nach oben bzw. unten zu verstellen. Taktzeitsynchron dazu wird der X-Achsenantrieb des Antriebsmotors 6 während der ersten Hälfte des Arbeitstakts stillgelegt, um in dieser Zeit die Verschweißung des Schlauchbeutels durch die aneinander zur Anlage gebrachten Quersiegelbacken 8 zu bewirken. In der zweiten Hälfte des Arbeitstakts werden die Quersiegelbacken 8 dann zunächst auseinandergefahren und dann wieder zusammengefahren, so dass am Ende des Arbeitstakts der nächste Schlauchbeutel gesiegelt werden kann.

Das unterste Diagramm zeigt die Parameterprofilkurve 26 des Drehmoments des Antriebsmotors 6 während eines Arbeitstakts. Man erkennt daraus, dass das Antriebsmoment des Antriebsmotors 6 während der ersten Hälfte des Arbeitstakts, d.h. in der Zeit zwischen t0 und t1 parabelförmig ansteigt und anschließend nach Überschreiten eines Höhepunkts wieder parabelförmig abfällt. Durch diesen parabelförmigen Verlauf des Drehmoments wird eine optimale Verschweißung der Folienbahn des Schlauchbeutels ermöglicht. In der zweiten Hälfte des Arbeitstakts ist dann das Drehmoment des Antriebsmotors 6 nahe dem Nullpunkt, da keine maßgebliche Kraft auf die Quersiegelbacken übertragen werden muss. Der Verlauf der Parameterprofilkurven 24, 25 und 26 ist lediglich beispielhaft und schematisch zu verstehen.

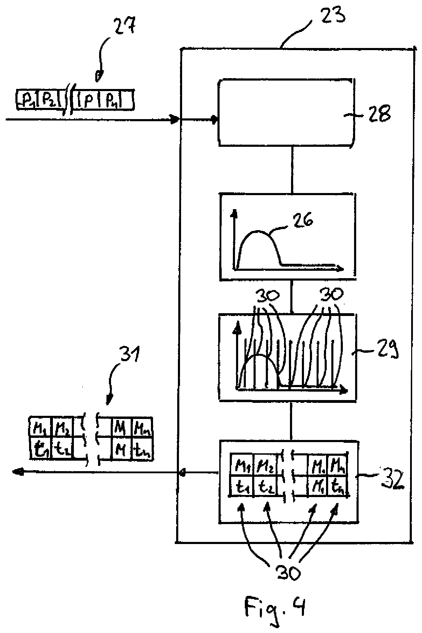

**Fig. 4** zeigt die PC-Steuerung 23 bei Durchführung des erfindungsgemäßen Verfahrens in einer schematisierten Prozessübersicht. Zunächst werden die Einstellparameter 27 von der SPC-Steuerung 20 über den Echtzeitdatenbus 21 in ein komplexes Berechnungsmodul 28 eingelesen. Im Berechnungsmodul 28 werden aus dem Einstellparameter 27 unter Berücksichtigung der statischen und dynamischen Grenzwerte der Verpackungsmaschine alle für den Betrieb des gewünschten Bewegungsablaufs erforderlichen Parameterprofilkurven berechnet. Fig. 4 zeigt dazu beispielhaft die Parameterprofilkurve 26.

In einem Diskretisierungsmodul 29 werden die Parameterprofilkurven 26 anschließend diskretisiert und Stützpunkte 30 berechnet, die die Parameterprofilkurve 26 in digitalisierter Form repräsentieren.

In einem Generierungsmodul 32 werden dann die Stützpunkte 30 analysiert und die Anzahl der Stützpunkte 30 reduziert. Die daraus erhaltene Auswahl von Stützpunkten 30 wird dann zur Generierung von Stützpunktdatensätzen 31 verwendet. Zuletzt werden die Stützpunktdatensätze 31 über den Echtzeitdatenbus 21 zurück an die SPS-Steuerung 20 übertragen, wo diese Stützpunktdatensätze 31 zur Ansteuerung der Antriebseinheiten der Verpackungsmaschine 1 verwendet werden.

## Patentansprüche

1. Verfahren zur Herstellung von Verpackungen, insbesondere Schlauchbeuteln, mittels einer Verpackungsmaschine (1) mit SPS-Steuerung (20), wobei die Verpackungsmaschine (1) mehrere unabhängig voneinander ansteuerbare elektronische Antriebseinheiten (3, 6) umfasst, die von der SPS-Steuerung (20) angesteuert werden und die verschiedene Funktionselemente (8) der Verpackungsmaschine (1) beim Abfahren von vordefinierten Bewegungsabläufen (33) taktzeitsynchron antreiben können, und wobei mehrere Einstellparameter (27) des Herstellungsprozess, insbesondere die Anzahl der zu verpackender Gegenstände pro Zeiteinheit, die Verpackungsabmessungen, die Siegelzeiten, vorgegeben sind, mit folgenden Verfahrensschritten:
a) Erfassung der Einstellparameter (27) an der SPS-Steuerung (20), die die Antriebseinheiten (3, 6) der Verpackungsmaschine (1) ansteuert;
b) Übergabe der Einstellparameter (27) von der SPS-Steuerung (20) an eine PC-Steuerung (23),
c) Berechnung der taktzeitabhängigen Parameterprofilkurven (24, 25, 26) für die taktzeitabhängigen Bewegungsprofile und/oder die taktzeitabhängigen Geschwindigkeitsprofile und/oder die taktzeitabhängigen Beschleunigungsprofile und/oder die taktzeitabhängigen Kraftprofile und/oder die taktzeitabhängigen Drehmomentprofile für die Ansteuerung der verschiedenen Antriebseinheiten (3, 6) in der PC-Steuerung (23), wobei die Parameterprofilkurven (24, 25, 26) die taktzeitsynchrone Ansteuerung der verschiedenen Antriebseinheiten (3, 6) beim Abfahren von vordefinierten Bewegungsabläufen (33) unter Einberechnung der vorgegebenen Einstellparameter (27) des Herstellungsprozess und unter Einberechnung der statischen und dynamischen Grenzwerte der Verpackungsmaschine (1) ermöglicht;
d) Diskretisierung der taktzeitabhängigen Parameterprofilkurven (24, 25, 26) in eine Mehrzahl von Stützpunkten (30) in der PC-Steuerung (23), wobei jeder Stützpunkt (30) aus einem Taktzeitpunkt und zumindest einem zugeordneten Parameterwert besteht;
e) Bildung mehrerer Stützpunktdatensätze (31) in der PC-Steuerung (23), wobei jeder Stützpunktdatensatz (31) zumindest eine Auswahl der Stützpunkte (30) enthält und die taktzeitabhängige Parameterprofilkurve (24, 25, 26) in diskretisierter Form repräsentiert,
f) Übergabe der Stützpunktdatensätze (31) von der PC-Steuerung (23) an die SPS-Steuerung (20).

2. Verfahren nach Anspruch 1,
**dadurch gekennzeichnet,**
**dass** bei der Diskretisierung der taktzeitabhängigen Parameterprofilkurven (24, 25, 26) eine große Anzahl von Stützpunkten (30), insbesondere mehr als 1000 Stützpunkte, berechnet wird, wobei bei der Generierung der Stützpunktdatensätze (31) die Anzahl der darin enthaltenen Stützpunkte (30) reduziert wird.

3. Verfahren nach Anspruch 1 oder 2,
**dadurch gekennzeichnet,**
**dass** die taktzeitabhängigen Parameterprofilkurven (24, 25, 26) in der PC-Steuerung als Polynomfunktionen höherer Ordnung berechnet werden.

4. Verfahren nach einem der Ansprüche 1 bis 3,
**dadurch gekennzeichnet,**
**dass** die PC-Steuerung (23) die einzugebenden Einstellparameter (27) und die auszugebenden taktzeitabhängigen Parameterprofilkurven (24, 25, 26) mit der SPS-Steuerung über einen Echtzeitdatenbus (21), insbesondere über ein Ethernet-Netzwerk, austauscht.

5. Verfahren nach einem der Ansprüche 1 bis 4,
**dadurch gekennzeichnet,**
**dass** bei jeder Veränderung eines Einstellparameters (27) unter Berücksichtigung von statischen Grenzwerten zumindest ein einstellungsspezifischer dynamischer Grenzwert in der PC-Steuerung (23) ermittelt und an die SPS-Steuerung (20) weitergeleitet wird.

6. Verfahren nach Anspruch 5,
**dadurch gekennzeichnet,**
**dass** zur Ermittlung der dynamischen Grenzwerte gespeicherte statische Grenzwerte und/oder gespeicherte Kurventabellen und/oder gespeicherte mathematische Funktionen verarbeitet werden.

7. Verfahren nach Anspruch 5 oder 6,
**dadurch gekennzeichnet,**
**dass** die Ermittlung der dynamischen Grenzwerte bei Berücksichtigung zumindest eines dynamischen Bewegungsablaufs (33) in der Verpackungsmaschine (1) in einer Berechnungsmethode der sukzessiven Approximation erfolgt.

8. Verfahren nach einem der Ansprüche 1 bis 7,
**dadurch gekennzeichnet,**
**dass** die Berechnung der taktzeitabhängigen Parameterprofilkurven (24, 25, 26) in einem komplexen Berechnungsmodul der PC-Steuerung unter Verwendung einer in Hochsprache programmierten Berechnungssoftware erfolgt.

9. Verfahren nach einem der Ansprüche 1 bis 8,
**dadurch gekennzeichnet,**
**dass** die SPS-Steuerung (20) unter Verwendung der Stützpunktdatensätze (31) die Antriebseinheiten einer Verpackungsmaschine, insbesondere eines Hüllstoffförderers und/oder die Antriebseinheiten (3, 6) zumindest einer Siegelbacke (8) und/oder die Antriebseinheiten einer Beutelschneidvorrichtung, ansteuert.

## Claims

1. A method for producing packaging, in particular tubular bags, by means of a packaging machine (1) having a PLC control (20), said packaging machine (1) comprising several electronic drive units (3, 6), which are capable of being controlled independently of each other, are controlled by the PLC control (20) and can drive different functional elements (8) of the packaging machine (1) in a manner synchronous to a clock cycle when trailing predefined movement trajectories (33), and several setting parameters (27) of the production process, in particular the number of objects to be packaged per time unit, the packaging dimensions, the sealing times, being predefined, the method comprising the following method steps:
a) capturing the setting parameters (27) at the PLC control (20) which controls the drive units (3, 6) of the packaging machine (1);
b) transmitting the setting parameters (27) from the PLC control (20) to a PC control (23);
c) calculating the clock-cycle-dependent parameter profile curves (24, 25, 26) for the clock-cycle-dependent movement profiles and/or the clock-cycle-dependent speed profiles and/or the clock-cycle acceleration profiles and/or the clock-cycle-dependent power profiles and/or the clock-cycle-dependent torque profiles for controlling the different drive units (3, 6) in the PC control (23), said parameter profile curves (24, 25, 26) enabling the clock-cycle-synchronous control of the different drive units (3, 6) when trailing predefined movement trajectories (33) by factoring in the predefined setting parameters (27) of the production process and by factoring in the static and dynamic threshold values of the packaging machine (1);
d) discretizing the clock-cycle-dependent parameter profile curves (24, 25, 26) into a plurality of interpolation points (30) in the PC control (23), each interpolation point (30) consisting of a clock-cycle point and at least one allocated parameter value;
e) forming several interpolation-point data sets (31) in the PC control (23), each interpolation-point data set (31) containing at least a selection of the interpolation points (30) and representing the clock-cycle-dependent parameter profile curve (24, 25, 26) in a discrete form;
f) transferring the interpolation-point data sets (31) from the PC control (23) to the PLC control (20).

2. The method according to claim 1,
**characterized in that**
when discretizing the clock-cycle-dependent parameter profile curves (24, 25, 26), a large number of interpolation points (30), in particular more than 1 000 interpolation points, is calculated, the number of the interpolation points (30) contained therein being reduced when generating the interpolation-point data sets (31).

3. The method according to claim 1 or 2,
**characterized in that**
the clock-cycle-dependent parameter profile curves (24, 25, 26) are calculated as polynomial functions of a higher degree in the PC control.

4. The method according to any one of the claims 1 to 3,
**characterized in that**
the PC control (23) exchanges the setting parameters (27) to be input and the clock-cycle-dependent parameter profile curves (24, 25, 26) to be output with the PLC control via a real-time data bus (21), in particular via an Ethernet network.

5. The method according to any one of the claims 1 to 4,
**characterized in that**
for every change of a setting parameter (27) under consideration of static threshold values, at least one setting-specific dynamic threshold value is identified in the PC control (23) and is forwarded to the PLC control (20).

6. The method according to claim 5,
**characterized in that**
for identifying the dynamic threshold values, saved static threshold values and/or saved curve tables and/or saved mathematical functions are processed.

7. The method according to claim 5 or 6,
**characterized in that**
the dynamic threshold values are identified in a calculation method of the gradual approximation under consideration of at least one dynamic movement trajectory (33) in the packaging machine (1).

8. The method according to any one of the claims 1 to 7,
**characterized in that**
the clock-cycle-dependent parameter profile curves (24, 25, 26) are calculated in a sophisticated calculation module of the PC control by using a calculation software programmed in a high-level programming language.

9. The method according to any one of the claims 1 to 8,
**characterized in that**
the PLC control (20) controls the drive units of a packaging machine, in particular an enveloping material conveyor, and/or the drive units (3, 6) of at least one sealing jaw (8) and/or the drive units of a bag-cutting device by using the interpolation-point data sets (31).

## Revendications

1. Procédé pour la production d'emballages, notamment de sachets tubulaires, au moyen d'une machine d'emballage (1) ayant une commande API (20), dans lequel la machine d'emballage (1) comprend plusieurs unités d'entraînement (3, 6) électroniques et commandables indépendamment les unes des autres qui sont commandées par la commande API (20) et qui peuvent entraîner des éléments fonctionnels (8) différents de la machine d'emballage (1) de manière synchrone au niveau du temps de cycle lorsque des séquences de mouvement (33) prédéfinies sont exécutées, et dans lequel plusieurs paramètres de réglage (27) du processus de production, notamment le nombre d'objets à emballer par unité de temps, les dimensions de l'emballage et les temps de scellage, sont prédéterminés, le procédé comprenant les étapes du procédé consistant à :
a) saisir les paramètres de réglage (27) sur la commande API (20) qui commande les unités d'entraînement (3, 6) de la machine d'emballage (1) ;
b) transmettre les paramètres de réglage (27) de la commande API (20) à une commande PC (23),
c) calculer les courbes de profils de paramètres (24, 25, 26) dépendantes du temps de cycle pour les profils de mouvement dépendants du temps de cycle et/ou les profils de vitesse dépendants du temps de cycle et/ou les profils d'accélération dépendants du temps de cycle et/ou les profils de force dépendants du temps de cycle et/ou les profils de couple dépendants du temps de cycle pour commander les unités d'entraînement (3, 6) différentes dans la commande PC (23), dans lequel les courbes de profils de paramètres (24, 25, 26) permettent la commande synchrone au niveau du temps de cycle des unités d'entraînement (3, 6) différentes lorsque des séquences de mouvement (33) prédéfinies sont exécutées tout en incluant les paramètres de réglage (27) prédéterminés du processus de production et incluant les valeurs limites statiques et dynamiques de la machine d'emballage (1) ;
d) discrétiser les courbes de profils de paramètres (24, 25, 26) dépendantes du temps de cycle en une pluralité de points d'interpolation (30) dans la commande PC (23), dans lequel chaque point d'interpolation (30) consiste en un point de temps de cycle et en au moins une valeur de paramètre attribuée ;
e) former plusieurs enregistrements de points d'interpolation (31) dans la commande de PC (23), dans lequel chaque enregistrement de points d'interpolation (31) contient au moins une sélection des points d'interpolation (30) et représente la courbe de profils de paramètres (24, 25, 26) dépendante du temps de cycle sous forme discrétisée,
f) transmettre les enregistrements de points d'interpolation (31) de la commande PC (23) à la commande API (20).

2. Procédé selon la revendication 1,
**caractérisé en ce**
**qu'**un grand nombre de points d'interpolation (30), notamment plus de 1000 points d'interpolation, sont calculés lorsque les courbes de profils de paramètres (24, 25, 26) dépendantes du temps de cycle sont discrétisées, dans lequel, lorsque les enregistrements de points d'interpolation (31) sont générés, le nombre de points d'interpolation (30) contenu dans ceux-ci est réduit.

3. Procédé selon la revendication 1 ou 2,
**caractérisé en ce que**
les courbes de profils de paramètres (24, 25, 26) dépendantes du temps de cycle sont calculées comme fonctions polynomiales de degré supérieur dans la commande PC.

4. Procédé selon l'une quelconque des revendications 1 à 3,
**caractérisé en ce que**
la commande PC (23) échange les paramètres de réglage (27) à entrer et les courbes de profils de paramètres (24, 25, 26) dépendantes du temps de cycle à sortir avec la commande API via un bus de données en temps réel (21), notamment via un réseau Ethernet.

5. Procédé selon l'une quelconque des revendications 1 à 4,
**caractérisé en ce que**,
chaque fois qu'un paramètre de réglage (27) est modifié en tenant compte de valeurs limites statiques, au moins une valeur limite dynamique spécifique au niveau du réglage est identifiée dans la commande PC (23) et transférée à la commande API (20).

6. Procédé selon la revendication 5,
**caractérisé en ce que**
des valeurs limites mémorisées et/ou des tableaux de courbes mémorisés et/ou des fonctions mathématiques mémorisées sont traités pour identifier les valeurs limites dynamiques.

7. Procédé selon la revendication 5 ou 6,
**caractérisé en ce que**
les valeurs limites dynamiques sont identifiées par une méthode de calcul de l'approximation successive en tenant compte d'au moins une séquence de mouvement (33) dynamique dans la machine d'emballage (1).

8. Procédé selon l'une quelconque des revendications 1 à 7,
**caractérisé en ce que**
les courbes de profils de paramètres (24, 25, 26) dépendantes du temps de cycle sont calculées dans un module de calcul sophistiqué de la commande PC en utilisant un logiciel de calcul programmé en un langage de programmation de haut niveau.

9. Procédé selon l'une quelconque des revendications 1 à 8,
**caractérisé en ce que**
la commande API (20) commande les unités d'entraînement d'une machine d'emballage, notamment d'un convoyeur de matériaux enveloppants, et/ou les unités d'entraînement (3, 6) d'au moins une mâchoire de scellage (8) et/ou les unités d'entraînement d'un dispositif de coupe de sachets en utilisant les enregistrements de points d'interpolation (31).
